(19) Europäisches Patentamt / European Patent Office / Office européen des brevets

(11) **EP 3 812 424 A1**

(12) **EUROPEAN PATENT APPLICATION**
published in accordance with Art. 153(4) EPC

(43) Date of publication:
28.04.2021 Bulletin 2021/17

(21) Application number: 19823717.4

(22) Date of filing: 19.06.2019

(51) Int Cl.:
C08L 33/02 (2006.01)          C08F 220/04 (2006.01)
C08K 3/24 (2006.01)           C11D 1/66 (2006.01)
C11D 3/37 (2006.01)           C11D 3/395 (2006.01)
C08F 2/30 (2006.01)

(86) International application number:
PCT/JP2019/024364

(87) International publication number:
WO 2019/244951 (26.12.2019 Gazette 2019/52)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 20.06.2018 JP 2018116784

(71) Applicant: Sumitomo Seika Chemicals Co., Ltd.
Kako-gun, Hyogo 675-0145 (JP)

(72) Inventors:
• TANAKA, Satomi
Himeji-shi, Hyogo 672-8076 (JP)
• KIYOMOTO, Rie
Himeji-shi, Hyogo 672-8076 (JP)
• MURAKAMI, Ryosuke
Himeji-shi, Hyogo 672-8076 (JP)

(74) Representative: Mewburn Ellis LLP
Aurora Building
Counterslip
Bristol BS1 6BX (GB)

(54) **COMPOSITION CONTAINING BLEACHING INGREDIENT AND PRODUCTION METHOD THEREFOR**

(57) There is provided a composition that contains a bleach component, and maintains a desired viscosity over a long period. A composition of the present invention comprises a carboxyl group-containing polymer composition (A) comprising a copolymer (a) of monomers including an $\alpha,\beta$-unsaturated carboxylic acid (a-1) and a compound (a-2) having at least two ethylenically unsaturated groups per molecule; and a nonionic surfactant (b), the carboxyl group-containing polymer composition (A) having a bulk density of 0.20 g/mL or less; a bleach component (B); an alkalinity buffering agent (C); and water (D). The composition has a pH higher than 10.

FIG. 1

EP 3 812 424 A1

**Description**

Technical Field

The present invention relates to a composition comprising a bleach component and a method for producing the composition.

Background Art

Conventionally, cleaning compositions containing bleach components have been extensively used as detergents for household use and industrial use. Such cleaning compositions contain bleach components, and are used for a wide range of applications, such as bleaching and disinfection of textiles, and cleaning of pipes (see Patent Literatures 1 and 2).

Examples of bleach components used in the cleaning compositions include alkali metal hypohalites, such as sodium hypohalite, and peroxygen compounds, such as hydrogen peroxide. The cleaning composition may also contain an alkalinity buffering agent to enhance the cleaning effect, so that the pH of the composition is increased to a level above 10, for example. The cleaning composition may further contain a thickener and the like to lengthen the residence of the cleaning composition on a target to be cleaned.

Citation List

Patent Literatures

Patent Literature 1: JP 2001-525452 A
Patent Literature 2: JP 3-166299 A

Summary of Invention

Technical Problem

As described above, the cleaning composition containing a bleach component may contain, in addition to the bleach component, an alkalinity buffering agent and a thickener, for example, to enhance the cleaning effect, and lengthen the residence of the cleaning composition on a target to be cleaned.

For example, the inclusion of a thickener can increase the viscosity of the cleaning composition containing a bleach component. However, in the case of a cleaning composition that is strongly alkaline with a pH above 10, for example, even if the viscosity is increased with a thickener, the viscosity of the composition decreases over time, and it is difficult to maintain a desired viscosity over a long period.

Under such circumstances, it is a main object of the present invention to provide a composition that contains a bleach component, and maintains a desired viscosity over a long period. It is another object of the present invention to provide a suitable method for producing the composition.

Solution to Problem

After thorough research to solve the aforementioned problem, the present inventors focused on the composition and the like of a thickener component for increasing the viscosity of a composition containing a bleach component. As a result, they have found that when a carboxyl group-containing polymer composition (A) comprising a copolymer (a) of monomers including an $\alpha,\beta$-unsaturated carboxylic acid (a-1) and a compound (a-2) having at least two ethylenically unsaturated groups per molecule, and a nonionic surfactant (b), is used as a thickener component, and the bulk density of the carboxyl group-containing polymer composition (A) is adjusted to 0.20 g/mL or less, a desired viscosity is maintained over a long period, even if the composition containing a bleach component is strongly alkaline with a pH above 10. The present invention has been completed by further conducting extensive research, based on this finding.

In summary, the present invention provides aspects of the invention comprising the following features:

Item 1. A composition comprising:

a carboxyl group-containing polymer composition (A) comprising a copolymer (a) of monomers including an α,β-unsaturated carboxylic acid (a-1) and a compound (a-2) having at least two ethylenically unsaturated groups per molecule; and a nonionic surfactant (b), the carboxyl group-containing polymer composition (A) having a bulk density of 0.20 g/mL or less;
a bleach component (B);
an alkalinity buffering agent (C); and
water (D),
the composition having a pH higher than 10.

Item 2. The composition according to item 1, which is used for a cleaning application.

Item 3. The composition according to item 1 or 2, wherein the bleach component (B) is a metal hypohalite.

Item 4. The carboxyl group-containing polymer composition according to any one of items 1 to 3, wherein the nonionic surfactant (b) is contained in an amount of 0.5 to 9 parts by mass per 100 parts by mass of the α,β-unsaturated carboxylic acid (a-1) in the carboxyl group-containing polymer composition (A).

Item 5. The carboxyl group-containing polymer composition according to item 1 or 2, wherein the nonionic surfactant (b) has an HLB value of 5 to 8 in the carboxyl group-containing polymer composition (A).

Item 6. A method for producing a composition having a pH higher than 10, comprising the step of mixing:

a carboxyl group-containing polymer composition (A) comprising a copolymer (a) of monomers including an α,β-unsaturated carboxylic acid (a-1) and a compound (a-2) having at least two ethylenically unsaturated groups per molecule; and a nonionic surfactant (b), the carboxyl group-containing polymer composition (A) having a bulk density of 0.20 g/mL or less;
a bleach component (B);
an alkalinity buffering agent (C); and
water (D).

Advantageous Effects of Invention

The present invention can provide a composition that contains a bleach component, and maintains a desired viscosity over a long period. The present invention can also provide a suitable method for producing the composition.

Brief Description of Drawings

Fig. 1 is a graph showing the relationship between change (%) in viscosity and the number of elapsed days for the compositions produced in the examples and comparative examples.
Fig. 2 is a graph showing the relationship between change (%) in available chlorine concentration and the number of elapsed days for the compositions produced in the examples and comparative examples.

Description of Embodiments

The composition of the present invention comprises a carboxyl group-containing polymer composition (A), a bleach component (B), an alkalinity buffering agent (C), and water (D), and has a pH higher than 10. In the composition of the present invention, the carboxyl group-containing polymer composition (A) comprises a copolymer (a) of monomers including an α,β-unsaturated carboxylic acid (a-1) and a compound (a-2) having at least two ethylenically unsaturated groups per molecule; and a nonionic surfactant (b), and has a bulk density of 0.20 g/mL or less. Because the composition of the present invention comprises these features, it maintains a desired viscosity over a long period, despite containing a bleach component, and being strongly alkaline with a pH above 10.

The composition of the present invention and a method for producing the composition will be hereinafter described in detail. As used herein, values connected with the preposition "to" refer to the numerical range that includes the values before and after "to" as the lower and upper limits. When a plurality of lower limits and a plurality of upper limits are mentioned separately, any lower limit and any upper limit may be selected, and connected with "to".

[Carboxyl Group-Containing Polymer Composition (A)]

The carboxyl group-containing polymer composition (A) comprises a copolymer (a) of monomers including an α,β-unsaturated carboxylic acid (a-1) and a compound (a-2) having at least two ethylenically unsaturated groups per molecule; and a nonionic surfactant (b). The copolymer (a) is produced by copolymerizing the monomers including the α,β-unsaturated carboxylic acid (a-1) and the compound (a-2) having at least two ethylenically unsaturated groups per molecule. Specifically, the copolymer (a) is producing by using at least the α,β-unsaturated carboxylic acid (a-1) and the compound (a-2) having at least two ethylenically unsaturated groups per molecule as monomers, and copolymerizing monomers including these monomers. The copolymer (a) is a component that forms a gel when it is mixed with water, and adjusted to a pH of 5 or more.

(α,β-Unsaturated Carboxylic Acid)

Examples of the α,β-unsaturated carboxylic acid (a-1) (sometimes referred to as the "monomer (a-1)") include, but are not limited to, olefinic unsaturated carboxylic acids having 3 to 5 carbon atoms, such as acrylic acid, methacrylic acid, crotonic acid, maleic acid, itaconic acid, and fumaric acid. Among these α,β-unsaturated carboxylic acids (a-1), acrylic acid and methacrylic acid are suitably used, because they are inexpensive and readily available, and favorably maintain the viscosity of the composition of the present invention over a long period. These α,β-unsaturated carboxylic acids may be used alone or in combinations of two or more.

(Compound Having At Least Two Ethylenically Unsaturated Groups per Molecule)

Examples of the compound (a-2) having at least two ethylenically unsaturated groups per molecule (compound (a-2) having at least two ethylenically unsaturated groups per molecule; hereinafter referred to as the "compound (a-2) having at least two ethylenically unsaturated groups", and sometimes simply referred to as the "monomer (a-2)") include, but are not limited to, di-substituted or higher acrylic acid esters of polyols; di-substituted or higher methacrylic acid esters of polyols; di-substituted or higher allyl ethers of polyols; diallyl phthalate, triallyl phosphate, allyl methacrylate, tetraallyloxyethane, triallyl cyanurate, divinyl adipate, vinyl crotonate, 1,5-hexadiene, and divinylbenzene. Examples of the above-described polyols include ethylene glycol, propylene glycol, polyoxyethylene glycol, polyoxypropylene glycol, glycerol, polyglycerol, trimethylolpropane, pentaerythritol, saccharose, and sorbitol. Among these compounds having at least two ethylenically unsaturated groups, pentaerythritol polyallyl ethers such as pentaerythritol diallyl ether, pentaerythritol triallyl ether, and pentaerythritol tetraallyl ether, tetraallyloxyethane, triallyl phosphate, and polyallylsaccharose are suitably used, because they favorably maintain the viscosity of the composition of the present invention over a long period. These compounds (a-2) having at least two ethylenically unsaturated groups may be used alone or in combinations of two or more.

The proportion of the compound (a-2) having at least two ethylenically unsaturated groups is preferably 0.01 to 10 parts by mass, and more preferably 0.05 to 3 parts by mass, per 100 parts by mass of the α,β-unsaturated carboxylic acid. When the proportion of the compound (a-2) having at least two ethylenically unsaturated groups is 0.01 part by mass or more, or even 0.05 part by mass or more, a desired viscosity of the composition of the present invention is favorably maintained over a long period. Furthermore, when the amount of the compound having at least two ethylenically unsaturated groups used is 10 parts by mass or less, or even 3 parts by mass or less, a desired viscosity of the composition of the present invention is favorably maintained over a long period. As used herein, "100 parts by mass of the α,β-unsaturated carboxylic acid" refers to the entire amount of the α,β-unsaturated carboxylic acid (a-1).

(α,β-Unsaturated Compound)

As a monomer constituting the copolymer (a), an α,β-unsaturated compound (a-3) (hereinafter sometimes referred to as the "monomer (a-3)"), for example, may be used, because it favorably maintains the viscosity of the composition of the present invention over a long period.

The α,β-unsaturated compound (a-3) is not limited as long as it differs from the α,β-unsaturated carboxylic acid (a-1), and examples include acrylic acid esters, such as methyl acrylate, ethyl acrylate, isopropyl acrylate, butyl acrylate, octyl acrylate, 2-ethyl acrylate, decyl acrylate, lauroyl acrylate, stearyl acrylate, and glycidyl acrylate; methacrylic acid esters corresponding to the above-described acrylic acid esters; glycidyl ethers, such as vinyl glycidyl ether, isopropenyl glycidyl ether, allyl glycidyl ether, and butenyl glycidyl ether; acrylamides, such as acrylamide, N-methylacrylamide, N-ethylacrylamide, and N-t-butylacrylamide; methacrylamides corresponding to the above-described acrylamides; and vinyl esters, such as vinyl acetate, vinyl propionate, and vinyl benzoate. Among these α,β-unsaturated compounds (a-3), acrylic acid esters and methacrylic acid esters are suitably used; in particular, acrylic acid esters and methacrylic acid esters having linear or branched alkyl groups with 12 to 40 (particularly 15 to 30) carbon atoms are preferably used, and stearyl methacrylate, eicosanyl methacrylate, behenyl methacrylate, and tetracosanyl methacrylate are more preferably used. These α,β-unsaturated compounds (a-3) may be used alone or in combinations of two or more. As such an acrylic acid ester or methacrylic acid ester, trade name BLEMMER-VMA-70 available from NOF Corporation, for example, may be used.

The proportion of the α,β-unsaturated compound (a-3) is preferably 0.1 to 20 parts by mass, and more preferably 1 to 10 parts by mass, per 100 parts by mass of the α,β-unsaturated carboxylic acid (a-1). When the proportion of the α,β-unsaturated compound (a-3) is 0.1 part by mass or more, or even 1 part by mass or more, a desired viscosity of the composition of the present invention is favorably maintained over a long period. Furthermore, when the amount of the α,β-unsaturated compound (a-3) used is 20 parts by mass or less, or even 10 parts by mass or less, a desired viscosity of the composition of the present invention is favorably maintained over a long period.

In the present invention, although the total proportion of the α,β-unsaturated carboxylic acid (a-1), the compound (a-2) having at least two ethylenically unsaturated groups, and the α,β-unsaturated compound (a-3) in the monomers constituting the copolymer (a) is not limited, it is, for example, preferably 50% by mass or more, more preferably about 80 to 100% by mass, still more preferably about 90 to 100% by mass, and particularly preferably about 95 to 100% by mass. The total proportion may be substantially 100% by mass. Although the proportion of the α,β-unsaturated carboxylic acid (a-1) in the monomers constituting the copolymer (a) is not limited, it is, for example, preferably 95% by mass or more, more preferably about 96 to 99% by mass, and still more preferably about 97 to 98% by mass.

The method for copolymerizing these monomers is not limited, and a known or conventional method can be adopted. Specifically, the copolymerization can be carried out using, for example, any of the following methods (1) to (3):

method (1): the α,β-unsaturated carboxylic acid (a-1) and the compound (a-2) having at least two ethylenically unsaturated groups (as well as optionally the α,β-unsaturated compound (a-3)) are allowed to coexist from the beginning of polymerization (for example, the entire amounts of the respective components are allowed to coexist), and the copolymerization is carried out;

method (2): the compound (a-2) having at least two ethylenically unsaturated groups is continuously added to the α,β-unsaturated carboxylic acid (a-1), and the polymerization is carried out simultaneously, wherein when the α,β-unsaturated compound (a-3) is used, the method for subjecting the compound to polymerization is not limited, and, for example, the α,β-unsaturated compound (a-3) may be allowed to coexist with the α,β-unsaturated carboxylic acid (a-1) in advance, or may be continuously added like the compound (a-2) having at least two ethylenically unsaturated groups; and

method (3): the α,β-unsaturated carboxylic acid (a-1) and the compound (a-2) having at least two ethylenically unsaturated groups are continuously added, and the polymerization is carried out simultaneously, wherein when the α,β-unsaturated compound (a-3) is used, the method for subjecting the compound to polymerization is not limited, and, for example, the α,β-unsaturated compound (a-3) may be introduced into the polymerization system in advance, or may be continuously added like the α,β-unsaturated carboxylic acid (a-1) and the compound (a-2) having at least two ethylenically unsaturated groups.

By way of example, the method (1) is specifically described. In the method (1), the α,β-unsaturated carboxylic acid (a-1), the compound (a-2) having at least two ethylenically unsaturated groups, a radical polymerization initiator, and an inert solvent, each weighed out in advance to give a desired amount, are introduced into a reaction vessel equipped with a stirrer, a thermometer, a nitrogen gas inlet tube, and a condenser tube, for example.

Subsequently, the contents in the reaction vessel are mixed with stirring to give a homogeneous composition. Subsequently, nitrogen gas is blown into the contents to remove oxygen gas contained in the upper space of the reaction vessel and dissolved oxygen dissolved in the contents. The polymerization reaction can be performed by heating to 20 to 120°C, preferably 30 to 90°C, in a warm bath, for example. The polymerization reaction is typically completed in 2 to 10 hours.

In the entire amount of the α,β-unsaturated carboxylic acid (a-1), the compound (a-2) having at least two ethylenically unsaturated groups, optionally the α,β-unsaturated compound (a-3), the radical polymerization initiator, and the inert solvent to be introduced, the total amount of the α,β-unsaturated carboxylic acid (a-1) and the compound (a-2) having at least two ethylenically unsaturated groups to be introduced (when the α,β-unsaturated compound (a-3) is used, the total proportion of the α,β-unsaturated carboxylic acid (a-1), the compound (a-2) having at least two ethylenically unsaturated groups, and the α,β-unsaturated compound (a-3)) is 1% by mass or more, and preferably 5% by mass or more, in order to increase the volume efficiency and improve productivity, whereas it is 30% by mass or less, and preferably 25% by mass or less, in order to allow the reaction to proceed smoothly, while avoiding an increase in the viscosity of the slurry due to significant precipitation of the polymer along with the progress of the polymerization reaction. The total amount to be introduced is preferably 1 to 30% by mass, and more preferably 5 to 25% by mass.

The inert solvent used to produce the copolymer (a) is not limited as long as it dissolves the α,β-unsaturated carboxylic acid (a-1), the compound (a-2) having at least two ethylenically unsaturated groups, and the α,β-unsaturated compound (a-3), but does not dissolve the copolymer (a) produced. Preferred specific examples of the inert solvent include optionally halogen-substituted aliphatic hydrocarbons having 2 to 8 carbon atoms, such as ethylene dichloride, normal pentane, normal hexane, isohexane, normal heptane, normal octane, and isooctane; alicyclic hydrocarbons having 5 to 7 carbon atoms, such as cyclopentane, methylcyclopentane, cyclohexane, and methylcyclohexane; optionally halogen-substituted aromatic hydrocarbons, such as benzene, toluene, xylene, and chlorobenzene; acetic acid alkyl esters, such as ethyl acetate and isopropyl acetate; and ketone-based compounds, such as methyl ethyl ketone and methyl isobutyl ketone. These inert solvents may be used alone or in combinations of two or more. Among these inert solvents, ethylene dichloride, normal hexane, cyclohexane, normal heptane, and ethyl acetate are preferred because they are stable in quality and readily available.

The radical polymerization initiator is not limited in type. Specific examples of the radical polymerization initiator include α,α'-azoisobutyronitrile, 2,2'-azobis-2,4-dimethylvaleronitrile, dimethyl-2,2'-azobisisobutylate, 2,2'-azobis(methyl isobutyrate), benzoyl peroxide, lauroyl peroxide, cumene hydroperoxide, and tert-butyl hydroperoxide. These radical polymerization initiators may be used alone or in combinations of two or more.

The amount of the radical polymerization initiator cannot be unequivocally determined since it varies depending on the type, reaction temperature, and the like. Typically, however, the amount of the radical polymerization initiator is preferably 0.1% by mass or more, and more preferably 0.3% by mass or more, based on the total amount of the α,β-unsaturated carboxylic acid (a-1), the compound (a-2) having at least two ethylenically unsaturated groups, and the α,β-unsaturated compound (a-3) that are used as monomers of the copolymer (a), in order to increase the rate of the polymerization reaction, whereas it is preferably 10% by mass or less, and more preferably 3% by mass or less, in order to facilitate removal of heat during the polymerization reaction. The amount of the radical polymerization initiator is preferably 0.1 to 10% by mass, and more preferably 0.3 to 3% by mass.

Because the presence of oxygen during the reaction adversely affects the reaction, it is preferred to remove oxygen from the reaction system in advance. Thus, the atmosphere during the reaction is preferably an inert gas atmosphere, such as nitrogen gas or argon gas, for example, in order to avoid the influence of oxygen.

(Nonionic Surfactant)

The nonionic surfactant (b) is composed of a hydrophilic moiety and a hydrophobic moiety. Examples of the hydrophobic moiety include a polyhydric alcohol fatty acid ester and an addition polymer of a hydroxy fatty acid.

Suitable examples of the polyhydric alcohol moiety of the polyhydric alcohol fatty acid ester include glycerol, polyglycerol, trimethylpropanol, sorbitol, and sorbitan, because they favorably maintain the viscosity of the composition of the present invention over a long period. The polyhydric alcohol residue of the nonionic surfactant (b) is preferably one derived from any of these polyhydric alcohols. These polyhydric alcohol moieties may be included alone or in combinations of two or more.

Suitable examples of the fatty acid moiety of the polyhydric alcohol fatty acid ester include stearic acid, isostearic acid, and palmitic acid. That is, the fatty acid residue of the nonionic surfactant (b) is preferably one derived from any of these fatty acids. These fatty acid moieties may be included alone or in combinations of two or more.

Examples of the polyhydric alcohol fatty acid ester in the hydrophobic moiety of the nonionic surfactant (b) include stearic acid esters, isostearic acid esters, palmitic acid esters, and hydrogenated castor oil derivatives.

Suitable examples of the addition polymer of the hydroxy fatty acid in the hydrophobic moiety of the nonionic surfactant (b) include addition polymers of 2-hydroxypalmitic acid, 16-hydroxypalmitic acid, and 12-hydroxystearic acid.

Examples of the hydrophilic moiety of the nonionic surfactant (b) include carboxy, hydroxy, amino, sulfonyl, and ether groups. The ether group in the hydrophilic moiety of the nonionic surfactant (b) may be, for example, an oxyalkylene chain such as polyoxyalkylene.

Suitable examples of the oxyalkylene chain in the nonionic surfactant (b) include an oxyalkylene group represented by the formula:

$$\text{Formula:} \quad -(CH_2-CHR^1-O)n-$$

wherein $R^1$ represents a hydrogen atom, a methyl group, or an ethyl group; n represents an integer from 1 to 100; and where n is an integer of 2 or more, a plurality of $R^1$s may each be the same or different.

The nonionic surfactant (b) is preferably a polyhydric alcohol fatty acid ester alkylene oxide adduct, for example, because it favorably maintains the viscosity of the composition of the present invention over a long period. The polyhydric alcohol fatty acid ester alkylene oxide adduct is an alkylene oxide adduct of a fatty acid ester of a polyhydric alcohol. The polyhydric alcohol fatty acid ester alkylene oxide adduct serves as an emulsifier.

Suitable examples of the polyhydric alcohol moiety of the polyhydric alcohol fatty acid ester alkylene oxide adduct include glycerol, polyglycerol, trimethylpropanol, sorbitol, and sorbitan, as mentioned above. That is, the polyhydric alcohol residue of the polyhydric alcohol fatty acid ester alkylene oxide adduct is preferably one derived from any of these polyhydric alcohols. These polyhydric alcohol moieties may be included alone or in combinations of two or more.

Suitable examples of the fatty acid moiety of the polyhydric alcohol fatty acid ester alkylene oxide adduct include stearic acid, isostearic acid, and palmitic acid, as mentioned above. That is, the fatty acid residue of the polyhydric alcohol fatty acid ester alkylene oxide adduct is preferably one derived from any of these fatty acids. These fatty acid moieties may be included alone or in combinations of two or more.

As mentioned above, examples of the polyhydric alcohol fatty acid ester of the polyhydric alcohol fatty acid ester alkylene oxide adduct include stearic acid esters, isostearic acid esters, palmitic acid esters, and hydrogenated castor oil derivatives.

Suitable examples of the oxyalkylene chain in the polyhydric alcohol fatty acid ester alkylene oxide adduct include the oxyalkylene group represented by the general formula (1) shown above.

The nonionic surfactant (b) preferably has an HLB of 5 to 8, in order to favorably maintain the viscosity of the composition of the present invention over a long period.

Preferred specific examples of the nonionic surfactant (b) include polyoxyethylene glyceryl triisostearate, polyoxyethylene (30) hydrogenated castor oil triisostearate, polyoxyethylene hydrogenated castor oil derivatives, polyoxyethylene glycerol fatty acid esters, and polyoxyethylene trimethylol tristearate, because they favorably maintain the viscosity of the composition of the present invention over a long period. Specific examples of polyoxyethylene glycerol fatty acid esters include polyoxyethylene glyceryl monostearate, polyoxyethylene glyceryl distearate, polyoxyethylene glyceryl tristearate, polyoxyethylene glyceryl isostearate, polyoxyethylene glyceryl diisostearate, polyoxyethylene glyceryl triisostearate, a block copolymer of 2-hydroxypalmitic acid with alkylene glycol, a block copolymer of 16-hydroxypalmitic acid with alkylene glycol, and a block copolymer of 12-hydroxystearic acid with alkylene glycol.

When a hydrogenated castor oil derivative is used as the polyhydric alcohol fatty acid ester, preferred specific examples of the polyhydric alcohol fatty acid ester alkylene oxide adduct include polyoxyethylene hydrogenated castor oil, polyoxyethylene hydrogenated castor oil laurate, polyoxyethylene hydrogenated castor oil isostearate, and polyoxyethylene hydrogenated castor oil triisostearate.

Among the polyhydric alcohol fatty acid ester alkylene oxide adducts, polyoxyethylene hydrogenated castor oil, polyoxyethylene hydrogenated castor oil isostearate, polyoxyethylene hydrogenated castor oil triisostearate, and polyoxyethylene sorbitol tetraoleate are preferred, because they favorably maintain the viscosity of the composition of the present invention over a long period.

In the carboxyl group-containing polymer composition (A), the amount of the nonionic surfactant (b) is 0.5 to 9 parts by mass, and more preferably 3 to 7 parts by mass, per 100 parts by mass of the $\alpha,\beta$-unsaturated carboxylic acid (a-1).

In the present invention, the carboxyl group-containing polymer composition (A) has a bulk density of 0.20 g/mL or less. The bulk density is preferably 0.10 to 0.18 g/mL, and more preferably 0.12 to 0.15 g/mL, in order to favorably maintain the viscosity of the composition of the present invention over a long period.

To set the bulk density of the carboxyl group-containing polymer composition (A) to the above-mentioned value, it is preferred to adopt, for example, the below-described method for producing the carboxyl group-containing polymer composition (A). The bulk density of the carboxyl group-containing polymer composition (A) is the value measured using the following method:

<Measurement of Bulk Density>

The loose bulk density of the carboxyl group-containing polymer composition (fine powder) is measured using a commercially available powder tester (available from Hosokawa Micron Corporation, for example). Specifically, the carboxyl group-containing polymer composition (fine powder) is allowed to fall from above to fill a 100-mL metal container. Here, the metal container filled with the fine powder is not subjected to tapping or a like operation to pack the fine powder. Subsequently, the mass of the fine powder filled in the metal container is measured, and the bulk density (mass in grams of the fine powder / 100 mL) is calculated.

In the composition of the present invention, although the amount of the carboxyl group-containing polymer composition (A) is not limited, it is preferably 0.5 to 3.0% by mass, and more preferably 1.0 to 2.0% by mass, in order to favorably maintain the viscosity of the composition of the present invention over a long period, while favorably achieving a cleaning effect when the composition is used for a cleaning application.

In the method for producing the carboxyl group-containing polymer composition (A), it is preferred to copolymerize the monomers in the presence of the nonionic surfactant (b). The method for copolymerizing the monomers is as described above. In particular, in order to favorably adjust the bulk density of the carboxyl group-containing polymer composition (A) to the above-mentioned value, it is preferred to add, in a step of copolymerizing the monomers, the nonionic surfactant (b) to the system when the polymerization degree of the $\alpha,\beta$-unsaturated carboxylic acid (a-1) has reached 5 to 80%. That is, it is preferred to add the nonionic surfactant (b) to the system while the copolymerization of the $\alpha,\beta$-unsaturated carboxylic acid (a-1) is incomplete (the polymerization degree is 5 to 80%). A carboxyl group-containing polymer composition having a bulk density adjusted to the above-mentioned value can be favorably produced by adding the nonionic surfactant (b) at this specific timing, in the process of producing the carboxyl group-containing polymer composition (A). As long as the nonionic surfactant (b) is added at least when the polymerization degree is 5 to 80%, a similar effect is achieved even if the nonionic surfactant (b) is separately added when the polymerization degree is less than 5% or above 80%.

The polymerization degree in the copolymerization step can be confirmed using the method described in the Examples.

In order to favorably maintain the viscosity of the composition of the present invention over a long period, the amount of the nonionic surfactant (b) to be added (that is, the amount of the nonionic surfactant (b) to be added when the polymerization degree is 5 to 80%) is preferably 0.5 to 9 parts by mass, and more preferably 3 to 7 parts by mass, per 100 parts by mass of the $\alpha,\beta$-unsaturated carboxylic acid (a-1).

When the monomers are copolymerized in the presence of the nonionic surfactant (b), the method for producing a carboxyl group-containing polymer composition can be carried out specifically according to the following methods (1A) and (2A):

Method (1A): the $\alpha,\beta$-unsaturated carboxylic acid (a-1) and the compound (a-2) having at least two ethylenically unsaturated groups (as well as optionally the $\alpha,\beta$-unsaturated compound (a-3)) are introduced into a reaction vessel in advance, these monomers are copolymerized, and when the polymerization degree has reached 5 to 80% (more preferably 5% or more and less than 70%), the nonionic surfactant (b) is added into the slurry in the system.

Method (2A): the $\alpha,\beta$-unsaturated carboxylic acid (a-1) and the compound (a-2) having at least two ethylenically unsaturated groups are each continuously added into a reaction vessel, and the copolymerization is carried out simultaneously, and when the polymerization degree has reached 5 to 80% (more preferably 5% or more and less than 70%), the nonionic surfactant (b) is added into the slurry in the system.

When the $\alpha,\beta$-unsaturated compound (a-3) is used in the method (2A), the method for subjecting the compound to polymerization is not limited; for example, the $\alpha,\beta$-unsaturated compound (a-3) may be introduced into the reaction vessel in advance, or may be continuously added into the reaction vessel like the $\alpha,\beta$-unsaturated carboxylic acid (a-1) and the compound (a-2) having at least two ethylenically unsaturated groups.

For example, in the method (1A), the $\alpha,\beta$-unsaturated carboxylic acid (a-1), the compound (a-2) having at least two ethylenically unsaturated groups, optionally the $\alpha,\beta$-unsaturated compound (a-3), the radical polymerization initiator, and the inert solvent, each weighed out in advance to give a desired amount, are introduced into a reaction vessel equipped with a stirrer, a thermometer, a nitrogen gas inlet tube, and a condenser tube. The contents in the reaction vessel are mixed with stirring to give a homogeneous composition, and then nitrogen gas is blown into the contents to remove oxygen gas contained in the upper space of the reaction vessel and dissolved oxygen dissolved in the contents. The polymerization reaction can be performed by heating to 20 to 120°C, preferably 30 to 90°C, in a warm bath, for example. The polymerization reaction is typically completed in 2 to 10 hours. Subsequently, after the polymerization degree is confirmed to have reached 5 to 80% (more preferably 5% or more and less than 70%), the nonionic surfactant (b) is diluted with an inert solvent and added into the slurry in the system, and the mixture is stirred to homogeneity. Thereafter, the inert solvent is distilled off from the reaction solution by heating under reduced pressure or normal pressure. In this manner, a carboxyl group-containing polymer composition can be obtained as a white fine powder.

[Bleach Component (B)]

In the composition of the present invention, the bleach component (B) is not limited, and may be, for example, one contained in a known cleaning composition containing a bleach component. Specific examples of the bleach component (B) include metal hypohalites and peroxygen compounds. These bleach components (B) may be used alone or as a mixture of two or more.

Specific examples of metal hypohalites include sodium hypochlorite, potassium hypochlorite, lithium hypochlorite, calcium hypochlorite, monobasic calcium hypochlorite, dibasic magnesium hypochlorite, chlorinated trisodium phosphate dodecahydrate, potassium dichloroisocyanurate, sodium dichloroisocyanurate, sodium dichloroisocyanurate dihydrate, trichlorocyanuric acid, 1,3-dichloro-5,5-dimethylhydantoin, N-chlorosulfamide, Chloramine T, Dichloramine T, Chloramine B, and Dichloramine B. Among the above, sodium hypochlorite or potassium hypochlorite is preferred because of its high versatility and the like.

Specific examples of peroxygen compounds include hydrogen peroxide. A peroxygen compound that produces hydrogen peroxide in water can also be suitably used, and examples of such peroxygen compounds include alkali metal peroxides, organic peroxides (for example, urea peroxide), and inorganic persalts (for example, alkali metal salts such as perborates, percarbonates, and perphosphates). Among the above, hydrogen peroxide is preferred because of its high versatility and the like.

The bleach component (B) is readily available as an aqueous solution, for example.

In the composition of the present invention, although the amount of the bleach component (B) is not limited, it is preferably 0.1 to 50% by mass, and more preferably 0.1 to 20% by mass, in order to favorably maintain the viscosity of the composition of the present invention over a long period, while favorably achieving a cleaning effect when the composition is used for a cleaning application.

[Alkalinity Buffering Agent (C)]

In the composition of the present invention, the alkalinity buffering agent (C) is not limited, and may be, for example, one contained in a known cleaning composition containing a bleach component. In the present invention, the alkalinity buffering agent (C) is a component used to keep the composition of the present invention strongly alkaline with a pH above 10. That is, the alkalinity buffering agent (C) is sufficient to provide the composition of the present invention with a pH higher than 10.

Specific examples of the alkalinity buffering agent (C) include sodium carbonate, sodium bicarbonate, potassium carbonate, sodium sesquicarbonate, sodium silicate, potassium silicate, sodium pyrophosphate, tetrapotassium pyrophosphate, tripotassium phosphate, trisodium phosphate, anhydrous sodium tetraborate, sodium tetraborate pentahydrate, potassium hydroxide, ammonium hydroxide, sodium tetraborate pentahydrate, potassium hydroxide, sodium hydroxide, and sodium tetraborate decahydrate, because they favorably keep the composition of the present invention strongly alkaline with a pH above 10. Among the above, sodium hydroxide or potassium hydroxide is preferred because of its high versatility and the like.

In the composition of the present invention, the amount of the alkalinity buffering agent (C) is not limited as long as it can adjust the pH of the composition of the present invention above 10.

[Water (D)]

In the composition of the present invention, the water (D) is not limited, and may be tap water, pure water, ion exchange water, industrial water, or the like.

In the composition of the present invention, although the amount of the water (D) is not limited, it is preferably 70% by mass or more, and more preferably 80% by mass or more, in order to favorably maintain the viscosity of the composition of the present invention over a long period, while favorably achieving a cleaning effect when the composition is used for a cleaning application.

[Other Components]

The composition of the present invention may further contain other components in addition to the components described above. The other components are not limited, and may be, for example, those contained in a known cleaning composition containing a bleach component. The other components may be used alone or as a mixture of two or more.

Specific examples of the other components include surfactants different from nonionic surfactants (anionic surfactants and cationic surfactants), builders, metal-ion sequestering agents, chelating agents, solvents, defoaming agents, corrosion inhibitors, fluorescent whitening agents, chelating agents, anti-redeposition agents, dispersion agents, dye scavengers, enzymes, skin emollients, humectants, and preservatives. The amounts of the other components can also be adjusted appropriately according to the application of the composition.

As long as the pH of the composition of the present invention is higher than 10, it can be appropriately set according to the application; it is preferably above 10 and not higher than 14.

While the viscosity of the composition of the present invention can be set appropriately according to the application, it is preferably 1,000 to 10,000 mPa·s, and more preferably 2,000 to 6,000 mPa·s, in order to favorably maintain the viscosity of the composition of the present invention over a long period, while favorably achieving a cleaning effect when the composition is used for a cleaning application. As used herein, the viscosity refers to the value measured using the following method:

<Measurement of Viscosity>

An evaluation sample is immersed for 30 minutes in a constant-temperature water bath adjusted to 25°C, and then the viscosity is measured using a BrookField viscometer (model number: DV1MRVTJ0) using spindle No. 3, 4, or 6 at 20 rpm.

The composition of the present invention can be easily produced by mixing the carboxyl group-containing polymer composition (A), the bleach component (B), the alkalinity buffering agent (C), the water (D), and optionally the other components. Preferred types and amounts of the components contained in the composition of the present invention are as described above.

The composition of the present invention is produced, for example, as follows: First, the carboxyl group-containing polymer composition (A) is sufficiently dispersed in the water (D), and then the alkalinity buffering agent (C) is added to neutralize and thicken the solution. Subsequently, after it is confirmed that the thickened solution is strongly basic with a PH test paper, the bleach component (B) is added, and the mixture is stirred sufficiently.

Since the composition of the present invention contains a bleach component, and maintains a desired viscosity over a long period, it can be suitably used for a cleaning application, for example.

Examples

The present invention will be hereinafter described in detail by way of examples and comparative examples, although the present invention is not limited to the examples.

[Evaluation Methods]

The polymerization degrees and the bulk densities of the carboxyl group-containing polymer compositions obtained in the synthesis examples, and changes over time in viscosity and in available chlorine concentration in the compositions obtained in the examples and comparative examples, were each measured using the following method. In the following examples, the HLB value of a nonionic surfactant is a catalog value.

<Calculation of Polymerization Degree>

In the process of producing the carboxyl group-containing polymer composition in each synthesis example, the polymerization degree was calculated based on the expression shown below. The amount of unreacted monomer (a-1) refers to the total amount of the monomer (a-1) that has not been added into the system at that time and the monomer (a-1) that is present in an unreacted state in the system to which the monomer has been added, out of the entire amount of the monomer (a-1) used in the polymerization reaction. In the expression, each amount of the monomer (a-1) is based on weight. The amount of the monomer (a-1) that is present in an unreacted state in the system to which the monomer has been added was measured by liquid chromatography, for example, high performance liquid chromatography. The amount of the monomer (a-1) that has not been added into the system at that time can be calculated by directly measuring the weight, or by measuring the volume, and calculating the amount based on the product of the volume and the density.

$$\text{Expression: (entire amount of the monomer used in the polymerization reaction}$$

$$- \text{ unreacted monomer)} \div \text{ entire amount of the monomer used in the polymerization}$$

$$\text{reaction}$$

<Measurement of Bulk Density>

The loose bulk density of the carboxyl group-containing polymer composition (fine powder) obtained in each synthesis example was measured using a powder tester available from Hosokawa Micron Corporation. Specifically, the carboxyl group-containing polymer composition (fine powder) was allowed to fall from above to fill a 100-mL metal container. Here, the metal container filled with the fine powder was not subjected to tapping or a like operation to pack the fine powder. Subsequently, the mass of the fine powder filled in the metal container was measured, and the bulk density (mass in grams of the fine powder / 100 mL) was calculated. The results are shown in Table 1.

<Measurement of Changes over Time in Viscosity>

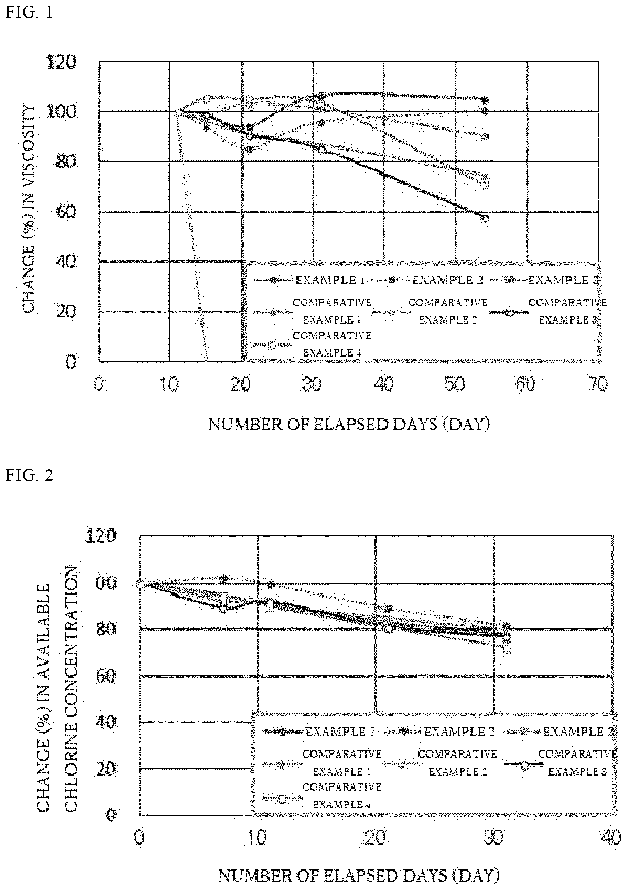

Each of the compositions obtained in the examples and comparative examples was sealed in a container. The container was placed in a constant temperature and humidity chamber (available from Espec Corporation; model number: LHU-113) set at a temperature of 50°C and a relative humidity of 75%. Subsequently, the viscosity after 0 (i.e., before being placed in the constant temperature and humidity chamber), 7, 11, 15, 21, 31, or 54 days was measured under the following conditions: Specifically, an evaluation sample was immersed for 30 minutes in a constant-temperature water bath adjusted to 25°C, and then the viscosity was measured using a BrookField viscometer (model number: DV1MRVTJ0) using spindle No. 4 at 20 rpm. It is noted that the viscosity was measured using spindle No. 6 for a sample having a viscosity value of 10,000 mPa·s or more, and using spindle No. 3 for a sample having a viscosity value of 1,000 mPa·s or less. That is, as shown in Table 2, the value of the sample of Comparative Example 2 after 7 days was measured using spindle No. 6, the values of the sample of Comparative Example 2 after 15 days and the sample of Comparative Example 4 after 0 day were measured using spindle No. 3, and the values of the samples other than those were measured using spindle No. 4. The results are shown in Table 2. Changes (%) in viscosity based on the viscosity after 11 days are also shown in Table 3 and in the graph of Fig. 1. For the composition of Comparative Example 2, the viscosity after 15 days was very low, and thus, the measurement was omitted thereafter ("-" denotes that the measurement was omitted).

<Measurement of Changes over Time in Available Chlorine Concentration>

Along with the measurement of the viscosity after 0 (i.e., before being placed in the constant temperature and humidity chamber), 7, 11, 15, 21, or 31 days in the <Measurement of Changes over Time in Viscosity> above, the available chlorine concentration (%) in the composition was measured using the following method: Specifically, one spatula (approximately 0.1 g as a guide) of the sample (after being immersed for 30 minutes in a constant-temperature water bath at 25°C) was added to a 100-mL volumetric flask, and the weight was recorded. This weight was determined as the sample weight "w" (g). Subsequently, 20 mL of a 20 wt% aqueous solution of potassium iodide was added and gently stirred, and then 10 mL of acetic acid was added, and the mixture was adjusted to a volume of 100 mL with pure water. The prepared solution was transferred into a 200-mL beaker, and the deposit in the volumetric flask was washed with about 15 mL of pure water (5 mL x 3 times) and then added to the 200-mL beaker. A 0.005 mol/L aqueous solution of sodium thiosulfate was added dropwise to the 200-mL beaker from a burette, until the end point at which the solution turned transparent, and the volume of the solution added dropwise was recorded. This volume was determined as the volume "a" (ml) of the aqueous solution of sodium thiosulfate added dropwise. The available chlorine concentration was calculated by substituting the sample weight "w" and the titration volume "a" into the following expression:

$$\text{available chlorine concentration (\%)} = \text{concentration of the aqueous solution of sodium thiosulfate} \times \text{factor of the aqueous solution of sodium thiosulfate} \times \text{volume "a" of the aqueous solution of sodium thiosulfate added dropwise} \div 1000 \times \text{molecular weight of chlorine} \div \text{sample weight "w"} \div \text{stoichiometry} \times 100 = 0.005 \times 1 \times a \div 1000 \times 70.906 \div w \div 2 \times 100$$

The results are shown in Table 3. Changes (%) in available chlorine concentration based on the available chlorine concentration after 0 day are also shown in Table 4 and in the graph of Fig. 2. As shown in Table 4, the measurement of available chlorine concentration was omitted as appropriate after 15, 21, or 31 days ("-" denotes that the measurement was omitted). Along with the measurement of changes in available chlorine concentration, the pH of the composition was measured. As a result, all the compositions of the examples and the comparative examples retained a pH of 13.

(Synthesis Example 1)

Into a 500-mL (milliliter) volume four-necked flask equipped with a stirrer, a thermometer, a nitrogen inlet tube, and a condenser tube were introduced 40 g of acrylic acid as a monomer (a-1), 0.22 g of pentaerythritol tetraallyl ether as a compound having at least two ethylenically unsaturated groups (monomer (a-2)), 0.116 g of 2,2'-azobis(methyl isobutyrate) as a radical polymerization initiator, and 230.9 g of normal hexane as a reaction solvent. Subsequently, the solution was homogeneously mixed with stirring, and then nitrogen gas was blown into the solution to remove oxygen present in the upper space of the reaction vessel (four-necked flask), the raw materials, and the reaction solvent. Then, the flask was heated to 60 to 65°C in a nitrogen atmosphere. Thereafter, the flask was held at 60 to 65°C for 3 hours. When the polymerization degree reached 54% (when the flask had been held at 60 to 65°C for about 1 hour), a solution of 2.0 g of a block copolymer of 12-hydroxystearic acid with polyoxyethylene (Hypermer B246 from Croda, HLB 6) as a nonionic surfactant (b) in 2.0 g of normal hexane was added to the reaction vessel. Thereafter, the resulting slurry was heated to 100°C to distill off the normal hexane, and the product was further dried under reduced pressure at 10 mmHg and 115°C for 8 hours, thereby obtaining 38 g of a carboxyl group-containing polymer composition as a white fine powder.

(Synthesis Example 2)

Into a 500-mL (milliliter) volume four-necked flask equipped with a stirrer, a thermometer, a nitrogen inlet tube, and a condenser tube were introduced 40 g of acrylic acid as a monomer (a-1), 0.4 g of BLEMMER-VMA-70 (NOF Corporation; a mixture containing 10 to 20 parts by mass of stearyl methacrylate, 10 to 20 parts by mass of eicosanyl methacrylate, 59 to 80 parts by mass of behenyl methacrylate, and 1% by mass or less of tetracosanyl methacrylate) as a (meth)acrylic acid alkyl ester containing an alkyl group with 18 to 24 carbon atoms (monomer (a-3)), 0.24 g of pentaerythritol tetraallyl ether as a compound having at least two ethylenically unsaturated groups (monomer (a-2)), 0.116 g of 2,2'-azobis(methyl isobutyrate) as a radical polymerization initiator, and 230.9 g of normal hexane as a reaction solvent. Subsequently, the solution was homogeneously mixed with stirring, and then nitrogen gas was blown into the solution to remove oxygen present in the upper space of the reaction vessel (four-necked flask), the raw materials, and the reaction solvent. Then, the flask was heated to 60 to 65°C in a nitrogen atmosphere. Thereafter, the flask was held at 60 to 65°C for 3 hours. When the polymerization degree reached 41% (when the flask had been held at 60 to 65°C for about 1 hour), a solution of 1.6 g of a block copolymer of 12-hydroxystearic acid with polyoxyethylene (Hypermer B246 from Croda, HLB 6) as a nonionic surfactant (b) in 2.0 g of normal hexane was added to the reaction vessel. Thereafter, the resulting slurry was heated to 100°C to distill off the normal hexane, and the product was further dried under reduced pressure at 10 mmHg and 115°C for 8 hours, thereby obtaining 39 g of a carboxyl group-containing polymer composition as a white fine powder.

(Comparative Synthesis Example 1)

Into a 500-mL (milliliter) volume four-necked flask equipped with a stirrer, a thermometer, a nitrogen inlet tube, and a condenser tube were introduced 40 g of acrylic acid as a monomer (a-1), 0.22 g of pentaerythritol tetraallyl ether as a compound having at least two ethylenically unsaturated groups (monomer (a-2)), 0.116 g of 2,2'-azobis(methyl isobutyrate) as a radical polymerization initiator, and 230.9 g of normal hexane as a reaction solvent. Subsequently, the solution was homogeneously mixed with stirring, and then nitrogen gas was blown into the solution to remove oxygen present in the upper space of the reaction vessel (four-necked flask), the raw materials, and the reaction solvent. Then, the flask was heated to 60 to 65°C in a nitrogen atmosphere. Thereafter, the flask was held at 60 to 65°C for 3 hours. Thereafter, the resulting slurry was heated to 100°C to distill off the normal hexane, and the product was further dried under reduced pressure at 10 mmHg and 115°C for 8 hours, thereby obtaining 36 g of a carboxyl group-containing polymer composition as a white fine powder.

(Comparative Synthesis Example 2)

Into a 500-mL (milliliter) volume four-necked flask equipped with a stirrer, a thermometer, a nitrogen inlet tube, and a condenser tube were introduced 40 g of acrylic acid as a monomer (a-1), 1.2 g of BLEMMER-VMA-70 (NOF Corporation; a mixture containing 10 to 20 parts by mass of stearyl methacrylate, 10 to 20 parts by mass of eicosanyl methacrylate, 59 to 80 parts by mass of behenyl methacrylate, and 1% by mass or less of tetracosanyl methacrylate) as a (meth)acrylic acid alkyl ester containing an alkyl group with 18 to 24 carbon atoms (monomer (a-3)), 0.004 g of pentaerythritol tetraallyl ether as a compound having at least two ethylenically unsaturated groups (monomer (a-2)), 0.116 g of 2,2'-azobis(methyl isobutyrate) as a radical polymerization initiator, and 230.9 g of normal hexane as a reaction solvent. Subsequently, the solution was homogeneously mixed with stirring, and then nitrogen gas was blown into the solution to remove oxygen present in the upper space of the reaction vessel (four-necked flask), the raw materials, and the reaction solvent. Then, the flask was heated to 60 to 65°C in a nitrogen atmosphere. Thereafter, the flask was held at 60 to 65°C for 3 hours. Thereafter, the resulting slurry was heated to 100°C to distill off the normal hexane, and the product was further dried under reduced pressure at 10 mmHg and 115°C for 8 hours, thereby obtaining 36 g of a carboxyl group-containing polymer composition as a white fine powder.

Table 1 shows the structures and the bulk densities of the carboxyl group-containing polymer compositions obtained in Synthesis Examples 1 and 2, and Comparative Examples 1 and 2. Bulk densities were similarly measured for Ultrez 10 and Ultrez 21, i.e., commercially available carboxyvinyl polymers (available from Lubrizol Advanced Materials, Inc.), which are widely used as thickeners for cleaning compositions containing bleach components.

[Table 1]

| | Carboxyl Group-Containing Polymer Composition | | | | |
| | Structure | | | | Bulk Density (g/mL) |
| | Monomer (a-1) (part(s) by mass) | Monomer (a-2) (part(s) by mass) | Monomer (a-3) (part(s) by mass) | Nonionic Surfactant (part(s) by mass) | |
| Synthesis Example 1 | 100.00 | 0.55 | - | 5.00 | 0.14 |

(continued)

| | Carboxyl Group-Containing Polymer Composition | | | | |
| | Structure | | | | Bulk Density (g/mL) |
| | Monomer (a-1) (part(s) by mass) | Monomer (a-2) (part(s) by mass) | Monomer (a-3) (part(s) by mass) | Nonionic Surfactant (part(s) by mass) | |
| Synthesis Example 2 | 100.00 | 0.60 | 1.00 | 4.00 | 0.13 |
| Comparative Synthesis Example 1 | 100.00 | 0.55 | - | - | 0.14 |
| Comparative Synthesis Example 2 | 100.00 | 0.01 | 3.00 | - | 0.14 |
| Ultrez 10 | - | | | | 0.26 |
| Ultrez 21 | - | | | | 0.29 |

(Example 1)

Using the carboxyl group-containing polymer composition obtained in Synthesis Example 1, a composition containing a bleach component was produced according to the following procedure: First, 288.6 g of pure water (giving a final concentration of 72.15% by mass in the composition) was taken into a 500-mL beaker (polyethylene). Subsequently, the impeller ("large" paddle type) of THREE-ONE MOTOR was set in the beaker, and stirring was initiated at 700 rpm. Subsequently, 6.0 g of the carboxyl group-containing polymer composition obtained in Synthesis Example 1 (giving a final concentration of 1.50% by mass in the composition) was slowly added and homogeneously dispersed in the pure water, and the stirring was continued for 20 minutes. Subsequently, 41.4 g of an aqueous solution of sodium hydroxide (concentration: 18% by mass) (giving a final solids concentration of 10.35% by mass in the composition) was added and stirred at 1000 rpm for 20 minutes. Subsequently, the rotation speed was reduced to 500 rpm, and then 64.0 g of an aqueous solution of sodium hypochlorite (concentration: 12% by mass) (giving a final solids concentration of 16.00% by mass in the composition) was added, and the stirring was continued for 20 minutes. As a result, a composition containing a bleach component (pH 13) was obtained.

(Example 2)

Using the carboxyl group-containing polymer composition obtained in Synthesis Example 1, a composition containing a bleach component was produced according to the following procedure: First, 272.8 g of pure water (giving a final concentration of 68.20% by mass in the composition) was taken into a 500-mL beaker (polyethylene). Subsequently, the impeller ("large" paddle type) of THREE-ONE MOTOR was set in the beaker, and stirring was initiated at 700 rpm. Subsequently, 8.0 g of the carboxyl group-containing polymer composition obtained in Synthesis Example 1 (giving a final concentration of 2.00% by mass in the composition) was slowly added and homogeneously dispersed in the pure water, and the stirring was continued for 20 minutes. Subsequently, 55.2 g of an aqueous solution of sodium hydroxide (concentration: 18% by mass) (giving a final solids concentration of 13.80% by mass in the composition) was added and stirred at 1000 rpm for 20 minutes. Subsequently, the rotation speed was reduced to 700 rpm, and then 64.0 g of an aqueous solution of sodium hypochlorite (concentration: 12% by mass) (giving a final solids concentration of 16.00% by mass in the composition) was added, and the stirring was continued for 20 minutes. As a result, a composition containing a bleach component (pH 13) was obtained.

(Example 3)

A composition containing a bleach component (pH 13) was obtained as in Example 1, except that the carboxyl group-containing polymer composition obtained in Synthesis Example 3 was used instead of the carboxyl group-containing polymer composition obtained in Synthesis Example 1.

(Comparative Example 1)

A composition containing a bleach component (pH 13) was obtained as in Example 1, except that the carboxyl group-containing polymer composition obtained in Comparative Synthesis Example 1 was used instead of the carboxyl group-containing polymer composition obtained in Synthesis Example 1.

(Comparative Example 2)

A composition containing a bleach component (pH 13) was obtained as in Example 1, except that the carboxyl group-containing polymer composition obtained in Comparative Synthesis Example 2 was used instead of the carboxyl group-containing polymer composition obtained in Synthesis Example 1.

(Comparative Example 3)

A composition containing a bleach component (pH 13) was obtained as in Example 1, except that a commercially available carboxyvinyl polymer, Ultrez 10 (available from Lubrizol Advanced Materials, Inc.), was used instead of the carboxyl group-containing polymer composition obtained in Synthesis Example 1.

(Comparative Example 4)

A composition containing a bleach component (pH 13) was obtained as in Example 1, except that a commercially available carboxyvinyl polymer, Ultrez 21 (available from Lubrizol Advanced Materials, Inc.), was used instead of the carboxyl group-containing polymer composition obtained in Synthesis Example 1.

[Table 2]

| | Carboxyl Group-Containing Polymer Composition (A) | Viscosity (actually measured value) [mPa-s] | | | | | | |
|---|---|---|---|---|---|---|---|---|
| | | after 0 day | after 7 days | after 11 days | after 15 days | after 21 days | after 31 days | after 54 days |
| Example 1 | Synthesis Example 1 (1.5% by mass) | 2,110 | 3,420 | 2,500 | 2,480 | 2,350 | 2,660 | 2,630 |
| Example 2 | Synthesis Example 1 (2.0% by mass) | 4,030 | 7,370 | 5,470 | 5,140 | 4,650 | 5,240 | 5,490 |
| Example 3 | Synthesis Example 2 (1.5% by mass) | 2,070 | 4,310 | 3,070 | 3,020 | 3,170 | 3,100 | 2,780 |
| Comparative Example 1 | Comparative Synthesis Example 1 (1.5% by mass) | 1,970 | 2,920 | 2,150 | 2,070 | 1,960 | 1,870 | 1,600 |
| Comparative Example 2 | Comparative Synthesis Example 2 (1.5% by mass) | 2,640 | 10,900 | 5,700 | 100 | - | - | - |
| Comparative Example 3 | Ultrez 10 (1.5% by mass) | 1,600 | 2,950 | 2,280 | 2,250 | 2,070 | 1,940 | 1,320 |
| Comparative Example 4 | Ultrez 21 (1.5% by mass) | 420 | 3,240 | 1,890 | 2,000 | 1,990 | 1,960 | 1,340 |

[Table 3]

| | Carboxyl Group-Containing Polymer Composition (A) | Changes [%] in Viscosity Based on Viscosity after 11 Days Taken as 100% | | | | |
|---|---|---|---|---|---|---|
| | | after 11 days | after 15 days | after 21 days | after 31 days | after 54 days |
| Example 1 | Synthesis Example 1 (1.5% by mass) | 100 | 99 | 94 | 106 | 105 |
| Example 2 | Synthesis Example 1 (2.0% by mass) | 100 | 94 | 85 | 96 | 100 |
| Example 3 | Synthesis Example 2 (1.5% by mass) | 100 | 98 | 103 | 101 | 91 |
| Comparative Example 1 | Comparative Synthesis Example 1 (1.5% by mass) | 100 | 96 | 91 | 87 | 74 |
| Comparative Example 2 | Comparative Synthesis Example 2 (1.5% by mass) | 100 | 2 | - | - | - |
| Comparative Example 3 | Ultrez 10 (1.5% by mass) | 100 | 99 | 91 | 85 | 58 |
| Comparative Example 4 | Ultrez 21 (1.5% by mass) | 100 | 106 | 105 | 104 | 71 |

[Table 4]

| | Carboxyl Group-Containing Polymer Composition (A) | Available Chlorine Concentration (actually measured value) [%] | | | | | |
|---|---|---|---|---|---|---|---|
| | | after 0 day | after 7 days | after 11 days | after 15 days | after 21 days | after 31 days |
| Example 1 | Synthesis Example 1 (1.5% by mass) | 2.14 | 1.98 | 1.94 | - | 1.78 | 1.67 |
| Example 2 | Synthesis Example 1 (2.0% by mass) | 1.93 | 1.97 | 1.92 | - | 1.72 | 1.58 |
| Example 3 | Synthesis Example 2 (1.5% by mass) | 2.13 | 1.96 | 1.95 | - | 1.75 | 1.62 |
| Comparative Example 1 | Comparative Synthesis Example 1 (1.5% by mass) | 2.12 | 1.99 | 1.91 | - | 1.80 | 1.69 |
| Comparative Example 2 | Comparative Synthesis Example 2 (1.5% by mass) | 2.09 | 1.94 | 1.95 | 1.82 | - | - |
| Comparative Example 3 | Ultrez 10 (1.5% by mass) | 2.17 | 1.93 | 1.99 | - | 1.76 | 1.67 |
| Comparative Example 4 | Ultrez 21 (1.5% by mass) | 2.13 | 2.02 | 1.91 | - | 1.72 | 1.54 |

[Table 5]

| | Carboxyl Group-Containing Polymer Composition (A) | Changes [%] in Available Chlorine Concentration Based on Concentration after 0 Day Taken as 100% | | | | | |
|---|---|---|---|---|---|---|---|
| | | after 0 day | after 7 days | after 11 days | after 15 days | after 21 days | after 31 days |
| Example 1 | Synthesis Example 1 (1.5% by mass) | 100.00 | 92.52 | 90.65 | - | 83.18 | 78.04 |
| Example 2 | Synthesis Example 1 (2.0% by mass) | 100.00 | 102.07 | 99.48 | - | 89.12 | 81.87 |
| Example 3 | Synthesis Example 2 (1.5% by mass) | 100.00 | 92.02 | 91.55 | - | 82.16 | 76.06 |
| Comparative Example 1 | Comparative Synthesis Example 1 (1.5% by mass) | 100.00 | 93.87 | 90.09 | - | 84.91 | 79.72 |
| Comparative Example 2 | Comparative Synthesis Example 2 (1.5% by mass) | 100.00 | 92.82 | 93.30 | 87.08 | - | - |
| Comparative Example 3 | Ultrez 10 (1.5% by mass) | 100.00 | 88.94 | 91.71 | - | 81.11 | 76.96 |
| Comparative Example 4 | Ultrez 21 (1.5% by mass) | 100.00 | 94.84 | 89.67 | - | 80.75 | 72.30 |

**Claims**

1. A composition comprising:

   a carboxyl group-containing polymer composition (A) comprising a copolymer (a) of monomers including an $\alpha,\beta$-unsaturated carboxylic acid (a-1) and a compound (a-2) having at least two ethylenically unsaturated groups per molecule; and a nonionic surfactant (b), the carboxyl group-containing polymer composition (A) having a bulk density of 0.20 g/mL or less;
   a bleach component (B);
   an alkalinity buffering agent (C); and
   water (D),
   the composition having a pH higher than 10.

2. The composition according to claim 1, which is used for a cleaning application.

3. The composition according to claim 1 or 2, wherein the bleach component (B) is a metal hypohalite.

4. The carboxyl group-containing polymer composition according to any one of claims 1 to 3, wherein the nonionic surfactant (b) is contained in an amount of 0.5 to 9 parts by mass per 100 parts by mass of the $\alpha,\beta$-unsaturated carboxylic acid (a-1) in the carboxyl group-containing polymer composition (A).

5. The carboxyl group-containing polymer composition according to claim 1 or 2, wherein the nonionic surfactant (b) has an HLB value of 5 to 8 in the carboxyl group-containing polymer composition (A).

6. A method for producing a composition having a pH higher than 10, comprising the step of mixing:

a carboxyl group-containing polymer composition (A) comprising a copolymer (a) of monomers including an α,β-unsaturated carboxylic acid (a-1) and a compound (a-2) having at least two ethylenically unsaturated groups per molecule; and a nonionic surfactant (b), the carboxyl group-containing polymer composition (A) having a bulk density of 0.20 g/mL or less;
a bleach component (B);
an alkalinity buffering agent (C); and
water (D).

FIG. 1

FIG. 2

## INTERNATIONAL SEARCH REPORT

| International application No. |
| --- |
| PCT/JP2019/024364 |

A. CLASSIFICATION OF SUBJECT MATTER
Int.Cl.  C08L33/02(2006.01)i,   C08F220/04(2006.01)i,   C08K3/24(2006.01)i,
         C11D1/66(2006.01)i,   C11D3/37(2006.01)i,   C11D3/395(2006.01)i,
         C08F2/30(2006.01)n
According to International Patent Classification (IPC) or to both national classification and IPC

B.  FIELDS SEARCHED

Minimum documentation searched (classification system followed by classification symbols)
Int.Cl.  C08L33/02, C08F220/04, C08K3/24, C11D1/66, C11D3/37, C11D3/395,
         C08F2/30

Documentation searched other than minimum documentation to the extent that such documents are included in the fields searched
| | |
| --- | --- |
| Published examined utility model applications of Japan | 1922–1996 |
| Published unexamined utility model applications of Japan | 1971–2019 |
| Registered utility model specifications of Japan | 1996–2019 |
| Published registered utility model applications of Japan | 1994–2019 |

Electronic data base consulted during the international search (name of data base and, where practicable, search terms used)
CAplus/REGISTRY (STN)

C.  DOCUMENTS CONSIDERED TO BE RELEVANT

| Category* | Citation of document, with indication, where appropriate, of the relevant passages | Relevant to claim No. |
| --- | --- | --- |
| A | WO 2017/170577 A1 (SUMITOMO SEIKA CHEMICALS CO., LTD.) 05 October 2017, entire text & US 2019/0077896 A1, entire text & EP 3438194 A1 & CN 108884290 A & KR 10-2018-0132068 A | 1-6 |
| A | JP 2016-530350 A (BASF SE) 29 September 2016, entire text & US 2016/0369209 A1, entire text & WO 2015/000970 A1 & EP 3016986 A1 & KR 10-2016-0030243 A | 1-6 |

☒  Further documents are listed in the continuation of Box C.          ☐  See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| 09 September 2019 (09.09.2019) | 17 September 2019 (17.09.2019) |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
| --- | --- |

Form PCT/ISA/210 (second sheet) (January 2015)

**INTERNATIONAL SEARCH REPORT**

International application No.

PCT/JP2019/024364

C (Continuation).    DOCUMENTS CONSIDERED TO BE RELEVANT

| Category* | Citation of document, with indication, where appropriate, of the relevant passages | Relevant to claim No. |
|---|---|---|
| A | WO 2016/056591 A1 (SUMITOMO SEIKA CHEMICALS CO., LTD.) 14 April 2016, entire text & US 2017/0291976 A1, entire text & EP 3205694 A1 & CN 106687524 A & KR 10-2017-0070009 A | 1-6 |
| A | JP 5-170805 A (SANYO CHEMICAL INDUSTRIES, LTD.) 09 July 1993, entire text (Family: none) | 1-6 |
| A | JP 2000-355614 A (SUMITOMO SEIKA CHEMICALS CO., LTD.) 26 December 2000, entire text & US 6869994 B1, entire text & WO 2000/077093 A1 & EP 1209198 A1 & CN 1370202 A | 1-6 |
| P, A | WO 2019/044680 A1 (SUMITOMO SEIKA CHEMICALS CO., LTD.) 07 March 2019, entire text (Family: none) | 1-6 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001525452 A

- JP 3166299 A